**Europäisches Patentamt**

(19) **European Patent Office**

**Office européen des brevets**

(11) Veröffentlichungsnummer : **0 221 889**
**B1**

(12) EUROPÄISCHE PATENTSCHRIFT

(45) Veröffentlichungstag der Patentschrift :
27.07.88

(51) Int. Cl.⁴ : **B 60 G  3/20,** B 60 G  3/26

(21) Anmeldenummer : 86890298.2

(22) Anmeldetag : 04.11.86

(54) Achse mit ungelenkten Rädern für Kraftfahrzeuge.

(30) Priorität : 06.11.85 AT 3194/85

(43) Veröffentlichungstag der Anmeldung :
13.05.87 Patentblatt 87/20

(45) Bekanntmachung des Hinweises auf die Patenterteilung : 27.07.88 Patentblatt 88/30

(84) Benannte Vertragsstaaten :
DE FR GB IT

(56) Entgegenhaltungen :
DE-A- 1 911 795
DE-A- 2 319 943
DE-A- 2 818 198
FR-A- 2 258 279
FR-A- 2 346 175
GB-A-   829 158
J.REIMPELL: "FAHRWERKTECHNIK", Band 1, 1982,
Seite 402, Vogel-Verlag, Würzburg, DE.

(73) Patentinhaber : Steyr-Daimler-Puch Aktiengesellschaft
Postfach 62 Franz-Josefs-Kai 51
A-1011 Wien (AT)

(72) Erfinder : Weber, Georg
Arndtstrasse 56/2/12
A-1120 Wien (AT)

**Beschreibung**

Die Erfindung bezieht sich auf eine Achse mit ungelenkten Rädern für Kraftfahrzeuge mit einem am Fahrzeugaufbau od. dgl. über elastische Stützkörper befestigten Querträger und an diesem angelenkten, etwa lotrecht geführten Radträgern, wobei die Stützkörper in angenähert waagrechter Ebene jeweils in verschiedenen Richtungen unterschiedliche Steifigkeit aufweisen und alle Gelenke eine elastische Ausfütterung besitzen.

Bei einer bekannten Achse dieser Art (DE-A-2 319 943) sind die Radträger an der Hinterseite des Querträgers mit Hilfe von schräg auswärts gerichteten, starren unteren Dreieckslenkern angelenkt und am Fahrzeugaufbau od. dgl. zur annähernd lotrechten Führung über Federelemente od. dgl. abgestützt. Der Querträger kann sich unter der Wirkung der bei Kurvenfahrt auftretenden Seitenkräfte schrägstellen, um an den Rädern eine sogenannte Vor- bzw. Nachspur und damit einen gewissen Selbstlenkeffekt zu erreichen. Diese Schrägstellung des Querträgers ist aber ausschließlich abhängig von der durch die unterschiedliche Steifigkeit in verschiedenen Richtungen erreichten jeweiligen Charakteristik der elastischen Stützkörper. Die Stützkörper dürfen daher nicht zu weich gewählt werden, was Nachteile hinsichtlich des Fahrkomforts mit sich bringen könnte. Die Abhängigkeit des Selbstlenkeffektes von den elastischen Stützkörpern allein hat auch den weiteren Nachteil, daß bei unterschiedlichem Straßenreibungsverhalten der beiden Räder der Achsen und plötzlichem Übergang vom Bremsen zum Beschleunigen oder umgekehrt ebenfalls eine, aber dann ungewollte und die Fahrsicherheit beeinträchtigende Querträgerschrägstellung bzw. eine Vor- und Nachspur auftritt. Würden zu weiche Stützkörper gewählt werden, so ließen sich die Massenträgheitskräfte der ganzen Achse bei plötzlichen Lenkbewegungen des Fahrers nicht voll beherrschen und es käme zu einer ungünstigen Verzögerung des Selbstlenkeffektes der Achse und den ungelenkten Rädern.

Es ist zwar auch schon bekannt, die Radträger am Querträger über je zwei untere Querlenker zu befestigen und am Fahrzeugaufbau od. dgl. über einen Längslenker und ein Federbein abzustützen, wobei sich die unteren Querlenker in gedachter Verlängerung seitlich außerhalb des Rades schneiden (Fahrwerktechnik 1, Jörnsen Reimpell, VOGEL-Verlag, 5. Aufl. 1982, Seite 402). Dabei handelt es sich aber um einen am Fahrzeugaufbau od. dgl. starr befestigten Querträger, so daß sich ein nur geringes Vor- bzw. Nachspurverhalten ergibt, weil dafür nur das verhältnismäßig kleine Volumen elastischen Materials zur Verfügung steht, das sich aus der Ausfütterung der Gelenke ergibt. Würde man hiefür größere Volumina bzw. weicheres elastisches Material verwenden, wäre die Radführung beeinträchtigt, zumal alle Brems- und Beschleunigungskräfte über die elastischen Ausfütterungen auf den Fahrzeugaufbau od. dgl. übertragen werden müssen.

Es ist ferner eine Starrachse bekannt (DE-A-1 911 795), die über einen mittigen elastischen Stützkörper am Fahrzeugaufbau od. dgl. befestigt und außerdem über zwei Schrägstreben an letzterem abgestützt sind, wobei sich der gedachte Schnittpunkt der Schrägstreben in Fahrzeugmitte hinter der Starrachse befindet. Eine solche Konstruktion hat den Nachteil, daß die Vor- bzw. Nachspur nur so weit möglich ist, wie es die Verschwenkung der Starrachse als solche erlaubt. Eine zusätzliche Beeinflussung des Selbstlenkverhaltens ist nicht möglich. Der mittlere elastische Stützkörper ist maßgeblich für die Bewegungsbegrenzung, weshalb auch hier die Freizügigkeit bei der Materialauswahl und der Stützkörperausbildung in bezug auf den Fahrkomfort eingeschränkt ist. Zu weiches elastisches Material würde die gleichen Mängel mit sich bringen, wie sie bei der ersten geschilderten Ausführung mit Querträger und starren unteren Dreieckslenkern angeführt sind. Ähnliches gilt schließlich für eine andere bekannte Radaufhängung (DE-A-2 818 198), bei der die unteren Querlenker unmittelbar am Fahrzeugaufbau od. dgl. angelenkt sind und je ein zusätzlicher Schräglenker mit elastischen Gelenken vorgesehen ist.

Der Erfindung liegt die Aufgabe zugrunde, alle diese Nachteile zu beseitigen und die eingangs geschilderte Achse so zu verbessern, daß sich der Selbstlenkeffekt nur bei Auftreten von Seitenkräften einstellt und hinsichtlich der Ausbildung der Stützkörper größere Freizügigkeit gewährleistet ist.

Die Erfindung löst die gestellte Aufgabe dadurch, daß der Querträger in an sich bekannter Weise über zwei Schrägstreben, deren gedachter Schnittpunkt hinter der Achse liegt, am Fahrzeugaufbau od. dgl. abgestützt ist und daß die Radträger, wie an sich ebenfalls bekannt, mit je zwei schräg zueinander verlaufenden, sich in gedachter Verlängerung seitlich außerhalb des Rades treffenden unteren Querlenkern am Querträger angelenkt sind und zur Abstützung einen am Fahrzeugaufbau od. dgl. gelagerten Längslenker aufweisen.

Durch die Schrägstreben wird der Momentanpol für die Schwenkbewegung des Querträgers festgelegt bzw. dessen genaue Führung erreicht, so daß eine wesentlich größere Freizügigkeit hinsichtlich der Ausbildung bzw. der Federcharakteristik der elastischen Stützkörper gegeben ist. Da die Radkörper nicht über starre Dreieckslenker, sondern über je zwei untere Querlenker am Querträger angelenkt sind, wird eine über die durch die Schrägstellung des Querträgers bedingte Vor- bzw. Nachspur hinausgehende Radlenkstellung erreicht, ohne Rücksicht auf Brems- bzw. Beschleunigungskräfte nehmen zu müssen, da diese von den Längslenkern aufgenommen bzw. übertragen werden. Zur Übertragung der Massenträgheitskräfte von der Achse auf den Fahrzeugaufbau od. dgl. stehen nicht nur die Schrägstreben, sondern auch die Längslenker zur Verfügung, so daß diese Massenträgheitskräfte ohne weiteres beherrscht werden können und es zu keiner ungünstigen Verzögerung des Selbstlenkeffektes bei plötzlichen Lenkbewegungen des Fahrers kommt. Insgesamt hat die durch die erfindungsgemäße Ausbildung bewirkte Trennung der Abstützung des Querträgers über die Schrägstreben einerseits und des Radträgers über die Längsachse anderseits den Vorteil, daß die Selbstlenkeigenschaft nur dann zur Wirkung kommt, wenn sie notwendig ist, nämlich bei Vorhandensein entsprechender Seitenkräfte, nicht aber beim Auftreten von sich beim Bremsen oder Beschleunigen ergebenden Längskräften. Selbstverständlich könnte der Querträger auch in Rahmenform ausgebildet sein.

In weiterer Ausbildung der Erfindung ist bei einer angetriebenen Achse der gedachte Schnittpunkt der Schrägstreben gegenüber der Längsmittelebene des Fahrzeuges nach einer Seite versetzt, und die Stützkörper einerseits und die Anlenkstellen der Schrägstreben am Querträger anderseits sind mit vertikalem Abstand voneinander angeordnet. Aus dem Eingangsmoment des Achsgetriebes einerseits und dem Abtriebsmoment dieses Getriebes anderseits ergibt sich ein resultierendes Moment, dessen Vektor schräg zur Fahrtrichtung steht und das Reaktionskräfte in den Stützkörpern zur Folge hat, die den Querträger schrägzustellen versuchen. Ein solcher aus diesen Gründen unerwünschter Lenkeffekt wird nun durch die einseitige Verlagerung des gedachten Schrägstrebenquerschnittpunktes kompensiert, wobei durch den vertikalen Abstand der Stützkörper von den Anlenkstellen der Schrägstreben das auf das Achsgetriebegehäuse zur Wirkung kommende Antriebsdrehmoment abgestützt wird.

In der Zeichnung ist der Erfindungsgegenstand beispielsweise dargestellt, und zwar zeigen

Fig. 1   die linke Hälfte einer Kraftfahrzeugachse schematisch im Schaubild und

Fig. 2   das Schema einer gleichartigen angetriebenen Achse in Draufsicht.

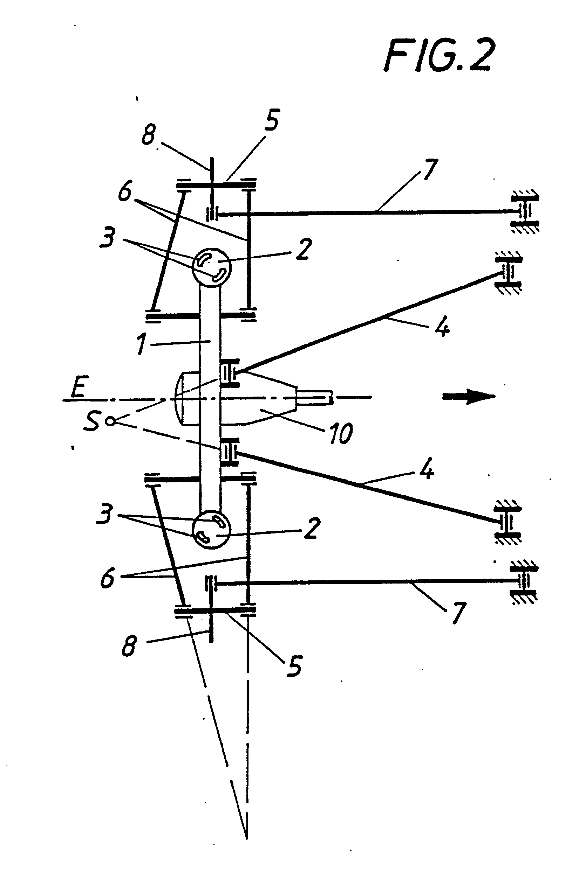

Eine Achse mit ungelenkten Rädern für Kraftfahrzeuge weist einen Querträger 1 auf, der am nicht dargestellten Fahrzeugaufbau über elastische Stützkörper 2 befestigt ist. Die Stützkörper 2 sind mit etwa nierenförmigen Ausnehmungen 3 versehen, so daß sie in zwei schräg zu der durch einen Pfeil angedeuteten Fahrtrichtung verlaufenden verschiedenen Richtungen eine unterschiedliche Steifigkeit aufweisen. Der Querträger 1 ist über zwei Schrägstreben 4, deren gedachter Schnittpunkt S hinter der Achse liegt (Fig. 2), am Fahrzeugaufbau od. dgl. abgestützt. Mit 5 sind die Radträger bezeichnet, die mittels je zweier Querlenker 6 am Querträger 1 angelenkt sind, wobei sich der Radträger 5 außerdem über Längslenker 7 am Fahrzeugaufbau od. dgl. abstützt. Die beiden Querlenker 6 verlaufen jeweils schräg zueinander und treffen sich in gedachter Verlängerung seitlich außerhalb des Rades (Fig. 2), das nur durch einen Achsstummel 8 angedeutet ist.

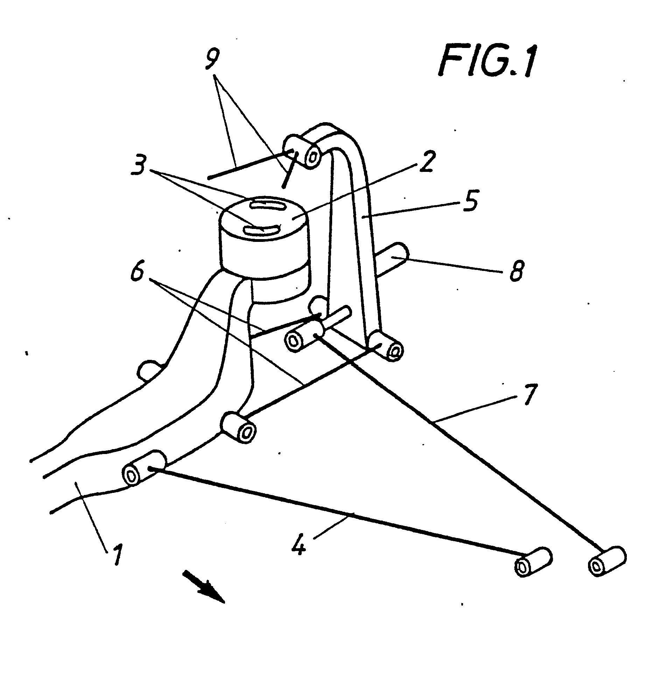

Zur annähernd lotrechten Führung des Radträgers 5 kann ein oberer Querlenker 9 (Fig. 1) vorgesehen sein, jedoch könnte für diesen Zweck auch ein Federbein od. dgl. angeordnet werden. Gemäß Fig. 2 ist mit 10 das Achsgetriebe bezeichnet, und es ist ersichtlich, daß der gedachte Schnittpunkt S der Schrägstreben 4 gegenüber der Längsmittelebene E des Fahrzeuges nach einer Seite versetzt ist. In diesem Fall sind die Anlenkstellen der Schrägstreben 4 am Querträger 1 bzw. am Getriebegehäuse 10 mit vertikalem Abstand von den Stützkörpern 2 angeordnet. Alle Gelenke weisen eine elastische Ausführung auf.

**Patentansprüche**

1. Achse mit ungelenkten Rädern für Kraftfahrzeuge mit einem am Fahrzeugaufbau od. dgl. über elastische Stützkörper befestigten Querträger (1) und an diesem angelenkten, etwa lotrecht geführten Radträgern (5), wobei die Stützkörper (2) in angenähert waagrechter Ebene jeweils in verschiedenen Richtungen unterschiedliche Steifigkeit aufweisen und alle Gelenke eine elastische Ausfütterung besitzen, dadurch gekennzeichnet, daß der Querträger (1) über zwei Schrägstreben (4), deren gedachter Schnittpunkt (S) hinter der Achse liegt, am Fahrzeugaufbau od. dgl. abgestützt ist und daß die Radträger (5) mit je zwei schräg zueinander verlaufenden, sich in gedachter Verlängerung seitlich außerhalb des Rades treffenden unteren Querlenkern (6) am Querträger (1) angelenkt sind und zur Abstützung einen am Fahrzeugaufbau od. dgl. gelagerten Längslenker (7) aufweisen.

2. Angetriebene Achse nach Anspruch 1, dadurch gekennzeichnet, daß der gedachte Schnittpunkt (S) der Schrägstreben (4) gegenüber der Längsmittelebene (E) des Fahrzeuges nach einer Seite versetzt ist und die Stützkörper (2) einerseits und die Anlenkstellen der Schrägstreben (4) am Querträger (1) anderseits mit vertikalem Abstand voneinander angeordnet sind.

**Claims**

1. An axle provided with unsteered wheels for motor vehicles, comprising a crossbeam (1), which is secured by elastic supporting members to a vehicle body or the like, and approximately vertically guided wheel carriers (5), which are articulatedly connected to the crossbeam, wherein the supporting members (2) have different stiffnesses in different directions in an approximately horizontal plane and all articulated joints have an elastic lining, characterized in that the crossbeam (1) is supported to the vehicle body or the like by two oblique struts (4) having an imaginary point of intersection (S) that is disposed behind the axle, each wheel carrier (5) is articulatedly connected to the crossbeam (1) by two lower transverse control arms (6), which extend obliquely relative to each other and have imaginary extensions in length which meet laterally outside the wheel and each wheel carrier (5) is supported by a longitudinal control arm (7), which is movably mounted on the vehicle body or the like.

2. A driven axle according to claim 1, characterized in that the imaginary point of intersection (S) of the oblique struts is offset towards one side from the longitudinal center plane (E) of the vehicle and the supporting members (2) and the points at which the oblique struts (4) are articulatedly connected to the crossbeam (1), on the other hand, are vertically spaced apart.

## Revendications

1. Essieu à roues non directrices pour véhicule à moteur avec une traverse (1) fixée à la carrosserie du véhicule ou à un élément analogue par l'intermédiaire de supports élastiques et avec des supports de roue (5) articulés sur cette traverse, guidés en sens sensiblement vertical, les supports (2) présentant dans un plan approximativement horizontal dans diverses directions une rigidité différente et toutes les articulations possédant une garniture élastique, caractérisé en ce que la traverse (1) prend appui sur la carrosserie du véhicule ou sur un élément analogue au moyen de deux jambes de force obliques (4) dont le point d'intersection (S) imaginaire est situé en arrière de l'essieu, et les supports de roue (5) sont articulés sur la traverse (1) chacun par deux bras oscillants transversaux inférieurs (6) s'étendant en oblique l'un vers·l'autre et dont les prolongements imaginaires se rencontrent sur le côté à l'extérieur de la roue, et qui présente pour leur soutien un bras oscillant longitudinal (7) articulé sur la carrosserie du véhicule ou sur un élément analogue.

2. Essieu tiré selon la revendication 1, caractérisé en ce que le point d'intersection (S) imaginaire des jambes de force obliques (4) est décalé vers un côté par rapport au plan longitudinal médian (E) du véhicule, et les supports (2) d'une part et les points .d'articulation des jambes de force obliques (4) à la traverse (1) d'autre part sont disposés avec un certain écartement en sens vertical les uns par rapport aux autres.

FIG.1

# FIG.2